# EUROPÄISCHE PATENTSCHRIFT

(11) **EP 1 206 418 B1**
(45) Veröffentlichungstag und Bekanntmachung des Hinweises auf die Patenterteilung: **02.05.2003**
(21) Anmeldenummer: 00962324.0
(22) Anmeldetag: 16.08.2000
(51) Int. Cl.: C03B 5/02, C03B 5/225, C03B 5/44, H05B 6/22

(54) **SKULLTIEGEL FÜR DAS ERSCHMELZEN ODER DAS LÄUTERN VON GLÄSERN ODER GLASKERAMIKEN**
SKULL POT FOR MELTING OR REFINING GLASS OR GLASS CERAMICS
CREUSET A FOND REFROIDI DESTINE A LA FUSION OU A L'AFFINAGE DU VERRE OU DE LA VITROCERAMIQUE

(30) Priorität: 21.08.1999 DE 19939780
(43) Veröffentlichungstag der Anmeldung: 22.05.2002
(73) Patentinhaber: Schott Glass, 55122 Mainz (DE); CARL-ZEISS-STIFTUNG trading as SCHOTT GLASWERKE, 55122 Mainz (DE)
(72) Erfinder: RÖMER, Hildegard, 61184 Karben (DE); KOLBERG, Uwe, 55252 Mainz-Kastel (DE); RÄKE, Guido, 55411 Bingen (DE); KIEFER, Werner, 55126 Mainz (DE)
(74) Vertreter: Dr. Weitzel & Partner
(86) Internationale Anmeldenummer: EP0007986
(87) Internationale Veröffentlichungsnummer: WO01014264

(56) Entgegenhaltungen:
- FR-A- 2 768 257
- LIFANOV F A ET AL: "A CRUCIBLE-TYPE INDUCTION FURNACE FOR MELTING GLASS" GLASS AND CERAMICS,US,CONSULTANTS BUREAU. NEW YORK, Bd. 48, Nr. 7 / 08, 1. Juli 1991 (1991-07-01), Seiten 288-290, XP000268262 ISSN: 0361-7610
- KUSHNIKOV V V ET AL: "INDUCTION MELTING IN A COLD CRUCIBLE FOR IMMOBILIZATION OF PLUTONIUM-CONTAINING WASTES" ATOMIC ENERGY,US,CONSULTANTS BUREAU, NEW YORK, NY, Bd. 83, Nr. 5, 1. November 1997 (1997-11-01), Seiten 801-806, XP000781558 ISSN: 1063-4258
- PETROV, YU.B ET AL.: "Continuous casting glass melting in a cold crucible induction furnace" XV INT. CONGRESS ON GLASS 1989, PROCEEDINGS, Bd. 3a, 2. - 7. Juli 1989, Seiten 72-77, XP000075308 Leningrad, SU
- DATABASE WPI Section Ch, Week 33 Derwent Publications Ltd., London, GB; Class K07, AN 2000-385316 XP002149690 -& RU 2 132 097 C (MOSC. RADON RADIOACTIVE WASTE DECONTAM.), 20. Juni 1999 (1999-06-20)
- MOULIN, J. ET AL.: "Nouveaux développements dans la fusion électrique des verres réfractaires" VERRES ET REFRACTAIRES, ARTICLES ORIGINAUX, Bd. 26, Nr. 4-5, Juli 1972 (1972-07) - Oktober 1972 (1972-10), Seiten 123-127, XP002150540 INSTITUT DU VERRE, PARIS, FR

## Beschreibung

Die Erfindung betrifft einen sogenannten Skulltiegel für das Erschmelzen oder das Läutern von Gläsern oder Glaskeramiken.

Solche Tiegel umfassen eine Tiegelwandung. Diese ist im allgemeinen zylindrisch. Sie ist aus einem Kranz von vertikalen Metallrohren aufgebaut. Zwischen einander benachbarten Rohren verbleiben Schlitze. Auch der Tiegelboden kann aus Metallrohren aufgebaut sein. Er kann aber auch aus Feuerfestmaterial bestehen.

Die Beheizung erfolgt durch eine Induktionsspule, die die Tiegelwandung umgibt, und über welche Hochfrequenzenergie in den Tiegelinhalt einkoppelbar ist.

Ein solcher Skulltiegel ist zum Beispiel aus EP 0 528 025 B1 bekanntgeworden.

LIFANOV F A ET AL: "A CRUCIBLE-TYPE INDUCTION FURNACE FOR MELTING GLASS" GLASS AND CERAMICS; US; CONSULTANTS BUREAU. NEW YORK, Bd. 48, Nr. 7/08, 1. Juli 1991 (1991-07-01), Seiten 288-290, XP000268262 ISSN: 0361-7610 zeigt und beschreibt einen Skull-Tiegel mit Rohren für Kühlwasser sowie mit einem Verteilrohr. Dabei ist jedoch über das Material der genannten Rohre nichts ausgesagt. Gleiches gilt für den in FR 2 768 257 A beschriebenen Skull-Tiegel.

Ein Skulltiegel arbeitet wie folgt: der Tiegel wird mit Gemenge oder Scherben oder einem Gemisch hieraus befüllt. Das Glas beziehungsweise die Schmelze müssen zunächst vorgeheizt werden, um eine gewisse Mindestleitfähigkeit zu erreichen. Das Vorheizen geschieht häufig durch Brennerbeheizung. Ist die Kopplungstemperatur erreicht, so kann die weitere Energiezufuhr über die Einstrahlung von Hochfrequenzenergie erfolgen. Auch während des Betriebes kann die Schmelze zusätzlich zu dem Beheizen mittels Hochfrequenzenergie durch Brenner beheizt werden, die auf die Schmelze von oben her einwirken. Die Zusatzbeheizung der Schmelzoberfläche kann auch über elektrische Heizelemente erfolgen.

An der gekühlten, aus den Metallrohren bestehenden Tiegelwandung bildet sich während des Betriebes eine Randschicht aus erstarrter Schmelze. Diese schützt die Tiegelwand vor Korrosion durch aggressive oder heiße Schmelzen. Diese kalte Randschicht ist je nach Glasschmelze glasig oder kristallin.

Auch die Bodenschicht ist kalt, da der Boden ebenfalls gekühlt wird, genauso wie die Umfangswandung. Dort bildet sich ebenfalls eine glasige oder kristallisierte kalte Bodenschicht. Diese ist für das Ausgießen der Schmelze durch einen Bodenablauf nachteilig. Um die Schmelze durch einen Bodenablauf ablaufen zu lassen, muß nämlich die erstarrte Bodenschicht entweder durchstoßen oder mittels Zusatzheizungen thermisch aufgelöst werden. Dabei wirkt eine kristalline Schicht für die vorbeiströmende Schmelze als Keimbildner, was unerwünscht ist.

Die Hochfrequenzenergie läßt sich lediglich zur Aufheizung des Skulltiegel-Innenraumes nutzbar machen. Sie kann hingegen nicht zur gezielten Erwärmung des gekühlten Bodenbereiches herangezogen werden. Wollte man nämlich mit der Induktionsheizung auch die bodennahen Schichten beheizen, so würde diesen Schichten wiederum Wärme durch die Bodenkühlung entzogen. Dies würde zu einer Verschlechterung des Energieeintrages führen - verglichen mit der ungekühlten heißen Mittelzone der Schmelze.

Es könnte auch daran gedacht werden, die Hochfrequenzleistung insgesamt zu steigern, so daß die Temperatur des Bodenbereiches die obere Entglasungstemperatur überschreitet. Damit wäre zwar das Problem des Ausgießens zu lösen. Jedoch würde die Schmelze im mittleren Bereich des Skulltiegels überhitzt werden. Dies könnte dazu führen, daß die Synthese durch selektive Verdampfung einzelner Glaskomponenten verschoben wird, was mit Brechwertschwankungen und Schlieren einhergeht.

Es ist somit festzuhalten, daß bei den bisher bekannten Schmelztiegeln relativ niedrige Temperaturen im Bodenbereich nachteilig sind.

Genauso nachteilig kann es aber sein, wenn der Oberflächenbereich der Schmelze in Läutergefäßen relativ kalt ist. Die kalten Oberflächenschichten der Schmelze behindern nämlich die Blasen am Aufsteigen und am Aufplatzen.

Aber nicht nur beim Läutern, sondern auch beim Einschmelzen sind hohe Temperaturen der Schmelze im Oberflächenbereich erwünscht. Diese begünstigen nämlich die Geschwindigkeit des Abschmelzens.

Der Erfindung liegt die Aufgabe zugrunde, Maßnahmen zu treffen, einen Skulltiegel derart zu gestalten, daß sich bei gegebener Energiezufuhr während des Betriebes die Temperatur in der Schmelze in verschiedenen Bereichen, die auf unterschiedlichen geodätischen Höhen liegen, kontrollieren läßt. Demgemäß soll es beispielsweise möglich sein, die Temperatur der Schmelze im unteren oder in einem mittleren oder im oberen Tiegelbereich besonders stark ansteigen zu lassen. Alternativ hierzu soll es ebensogut möglich sein, eine stärkere Homogenität der Temperatur über die gesamte Tiegelhöhe hinweg einzustellen.

Diese Aufgabe wird durch die Merkmale von Anspruch 1 gelöst.

Die Erfinder haben folgendes erkannt:
Die Hochfrequenzeinstrahlung wird auch in geringerem Maße von den metallischen Kühlfingern absorbiert. Hierdurch werden zwischen den elektrisch gegeneinander isolierten Kühlfingern Spannungen induziert. Dabei kommt es zu einer Lichtbogenbildung zwischen den einzelnen Kühlfingern.

Dies tritt besonders dann auf, wenn die erstarrte kalte Schicht aus arteigenem Material im Wandbereich bei hohen Schmelztemperaturen sehr dünn wird.

Dann liegt nämlich die volle Induktionsspannung an diesen Schichten an, da sowohl die Leitfähigkeit der heißen Schmelze als auch diejenige der Kühlfinger deutlich größer ist, als die Leitfähigkeit der gekühlten arteigenen Randschicht. Die geringen Randschichtdicken führen zu hohen Feldstärken und damit zur Bildung der genannten Lichtbogen oder Überschläge. Die Überschläge führen zu Beschädigungen der metallischen Kühlfinger und auf längere Sicht zur Zerstörung des Tiegels.

Durch die Erfindung, nämlich das Vorsehen eines Kurzschlußringes, werden die Überschläge vermieden. Damit wird somit die Lebensdauer des Skulltiegels gesteigert.

Bei sehr großen Skulltiegeln mit langen Kühlfingern wird es notwendig, sowohl oben als auch unten einen Kurzschlußring zu haben. Ein einziger Kurzschluß reicht nicht aus, um die HF-Induktionsspannungen abzubauen.

Dies gilt insbesondere für Schmelzen, die keine stabile, kristalline, elektrisch isolierende Randschicht zwischen Schmelze und Skullwand bilden. Bei Verwendung eines doppelten Kurzschlusses kann die Feld- und damit die Temperaturverteilung dadurch gezielt eingestellt werden, daß die Kurzschlußentfernung von der Schmelzmitte unterschiedlich weit entfernt gewählt wird.

Zum Beispiel kann man den Kurzschluß im Bodenbereich des Tiegels dadurch variabel gestalten, daß man die Kühlfinger des Skulls nicht direkt miteinander verbindet, sondern daß man die Kühlfinger über Gewindestangen nach unten verlängert und an den Gewindestangen einen verstellbaren Kurzschlußring anbringt. Mit einem solchen Tiegel kann je nach Schmelzphase (Einschmelzen, Läutern oder Guß) eine optimale Kurzschlußposition gewählt werden. Eine vergleichbare, höhenverstellbare Kurzschlußmodifikation kann man natürlich auch am oberen Tiegelrand positionieren.

Bei sehr großen Tiegelhöhen ist zwar einerseits ein zweiter Kurzschluß unter Umständen notwendig, andererseits ist es im Falle zweier Kurzschlüsse durchaus möglich, daß einer der beiden Kurzschlüsse weiter außerhalb gezogen werden kann. Dies gilt insbesondere für die Schmelzphase des Gießens, wenn relativ niedrige Schmelztemperaturen eingestellt werden und sich die kalte Glasrandschicht in der Regel auch bei kritischen Glassystemen ausbildet.

Die Erfinder haben jedoch noch Weiteres erkannt:
Werden die metallischen Kühlfinger miteinander kurzgeschlossen, so führt der Kurzschluß je nach seiner Lage zu einer Verdrängung des HF-Feldes nach oben oder nach unten. Befindet sich der Kurzschluß am Boden des Skulltiegels, so findet eine Verdrängung nach oben statt. Befindet sich der Kurzschluß im oberen Bereich, so findet eine Verdrängung nach unten statt. Bei einer Feldverdrängung nach oben wird der Oberflächenbereich der Schmelze heißer. Bei einer Verdrängung nach unten wird der Bodenbereich der Schmelze heißer. Man hat es somit in der Hand, je nach Anordnung des Kurzschlußes einen bestimmten Bereich der Schmelze in besonderem Maße aufzuheizen, oder auch eine homogene Temperaturverteilung zu erzielen.

Im allgemeinen wird man zum Läutern den Kurzschluß in den Bodenbereich legen. Das HF-Feld wird in diesem Falle nach oben verdrängt. Es wird der Oberflächenbereich der Schmelze besonders stark aufgeheizt. Die in der Schmelze enthaltenen Gasblasen steigen bereitwillig nach oben, wo sie die oberen Schichten der Schmelze leicht durchdringen und aufplatzen.

Auch beim Einschmelzen kann es vorteilhaft sein, den Kurzschluß in den Bodenbereich zu legen. Dabei wird wiederum eine besondere Erwärmung im Bereich der entstehenden Oberfläche stattfinden, so daß das Abschmelzen beschleunigt wird.

Während der Phase des Gießens sollte der Auslauf frei von Kristallen sein. Die Schmelze sollte im Auslaufbereich Viskositäten um 10⁴ dPas haben, ohne daß der Schmelzbereich in höheren Tiegelzonen auf Läutertemperatur erwärmt werden muß, was zu einem thermischen Reboilen führen würde. Um den Auslauf in der Gießphase frei von Kristallen zu halten, sollte der Kurzschluß in den oberen Bereich des Tiegel gelegt werden. In diesem Falle wird das HF-Feld nach unten verdrängt, so daß der Auslaufbereich besonders stark aufgeheizt wird.

Der Kurzschluß wird zweckmäßigerweise durch einen metallischen Ring realisiert, der die metallischen Kühlfinger elektrisch leitend miteinander verbindet. Der Kurzschluß - in welcher Form auch immer - muß an irgendeiner Stelle der Länge der Kühlfinger angeordnet sein, d.h. zwischen dem Boden des Skulltiegels und den oberen Enden der Kühlfinger. Liegt der Kurzschluß außerhalb dieses Bereiches, so ist er für hochfrequente Spannungen nicht mehr wirksam, weil nämlich der induktive Widerstand einer solchen "Leiterschleife" zu groß ist. US 4 049 384 beschreibt einen Skulltiegel, der aus zwei Modulen aufgebaut ist. Jedes Modul umfaßt eine Reihe von Kühlfingern, die im Halbkreis angeordnet sind und mit einer metallischen, ebenfalls halbkreisförmigen Bodenplatte fest verbunden sind. Die beiden Bodenplatten sind unter Zwischenfügung einer elektrischen Isolierung zusammengefügt, so daß kein Kurzschluß zwischen den Modulen hergestellt wird, worauf in jener Schrift Wert gelegt wird. Dies stand in Einklang mit der bisherigen Auffassung, wonach ein Kurzschluß vermieden werden muß, entgegen dem Grundgedanken der Erfindung.

Es könnte die Befürchtung aufkommen, daß mit einem Kurzschluß ein größeres Maß an Hochfrequenzleistung im Skulltiegel selbst verbraucht wird, oder daß das Hochfrequenzfeld nicht in den Innenbereich des Tiegels eindringt. Derartige Befürchtungen haben sich nicht bewahrheitet. Der Mehrverbrauch an Hochfrequenzleistung ist minimal. Die Erfindung hat somit starke Vorteile, aber so gut wie keine Nachteile.

Ein zusätzlicher Vorteil des erfindungsgemäßen Aufbaus bei Verwendung eines Kurzschlußringes ist eine mechanische Stabilisierung des Tiegels.

Die Erfindung ist anhand der Zeichnungen näher erläutert. Darin ist im einzelnen folgendes dargestellt:

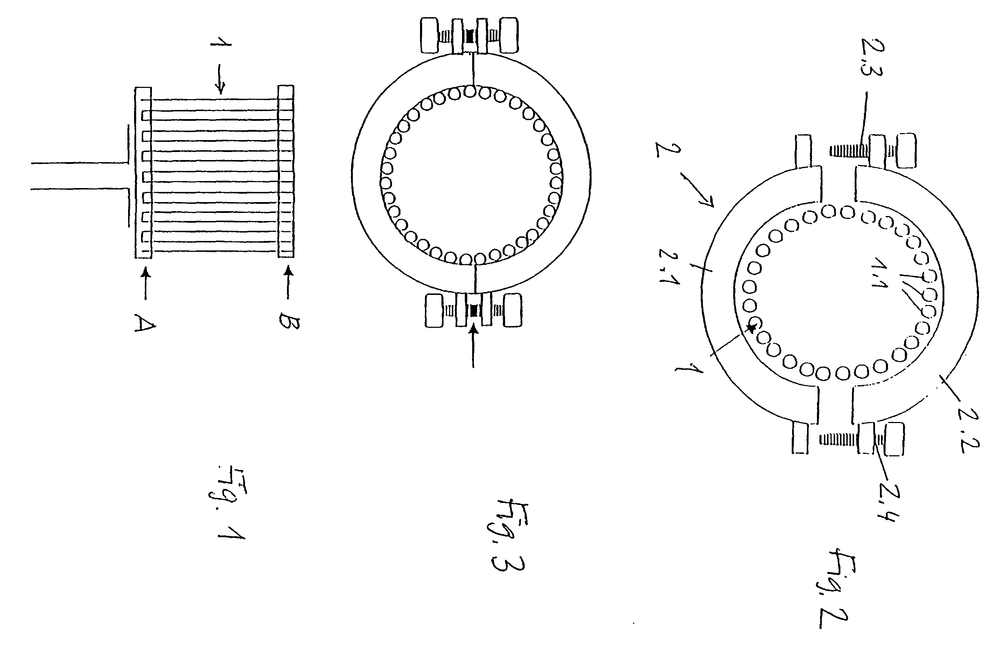

- Figur 1: zeigt einen Skulltiegel in schematischer Aufrißansicht in einem vertikalen Zentralschnitt.
- Figur 2: zeigt eine Kurzschlußeinrichtung in offenem Zustand.
- Figur 3: zeigt die Kurzschlußeinrichtung in geschlossenem Zustand.
- Figur 4: zeigt einen Skulltiegel in einer Darstellung entsprechend Figur 1 mit unten liegender Kurzschlußeinrichtung.
- Figur 5: zeigt einen Skulltiegel in einer Darstellung ähnlich Figur 1 mit oben liegender Kurzschlußeinrichtung.
- Figur 6: zeigt ein Diagramm des Temperaturverlaufes in der Schmelze.

Der in den Figuren dargestellte Skulltiegel dient dem Erschmelzen oder dem Läutern von Gläsern oder Glaskeramiken, vor allem von Glasscherben oder sogenanntem Gemenge oder von beidem.

Der Skulltiegel weist eine Wandung 1 auf. Diese ist aus einem Kranz von vertikalen Metallrohren gebildet, die miteinander in leitender Verbindung stehen und an ein Kühlmedium angeschlossen sind, beispielsweise an Wasser.

Der Boden des Skulltiegels 1.1 ist aus einer Quarzgutplatte aufgebaut. Auch er ist gekühlt, und zwar durch Luft, die aus Rohren austritt.

Die Wandung ist von einer Induktionsspule umgeben. Diese ist Bestandteil einer Hochfrequenzeinrichtung, mit welcher Hochfrequenzenergie in den Inhalt des Skulltiegels eingekoppelt wird.

Die beiden Pfeile A und B veranschaulichen Positionen A und B, in denen eine Kurzschlußeinrichtung angeordnet werden kann.

Die Figuren 2 und 3 zeigen den Aufbau der Kurzschlußeinrichtung. Sie umfaßt einen Ring, gebildet aus zwei Halbringsegmenten 2.1, 2.2 sowie zwei Spanneinrichtungen 2.3, 2.4. Wie man sieht, umschließen die beiden Spannringsegmente 2.1, 2.2 die Wandung 1, aufgebaut aus einer Vielzahl von kranzförmig angeordneten, kühlmittelführenden Metallrohren 1.1.

Bei der Darstellung gemäß Figur 3 ist die Kurzschlußeinrichtung kurzgeschlossen. Die Spanneinrichtungen 2.3, 2.4 sind verspannt. Die Halbringsegmente 2.1, 2.2 liegen berührend und damit elektrisch leitend an den Metallrohren 1.1 an. Die Halbringsegmente 2.1, 2.2 sowie die Metallrohre 1.1 sind derart gestaltet und angeordnet, daß die Halbringsegmente in diesem Zustand die Metallrohre 1.1 kraftschlüssig umschließen.

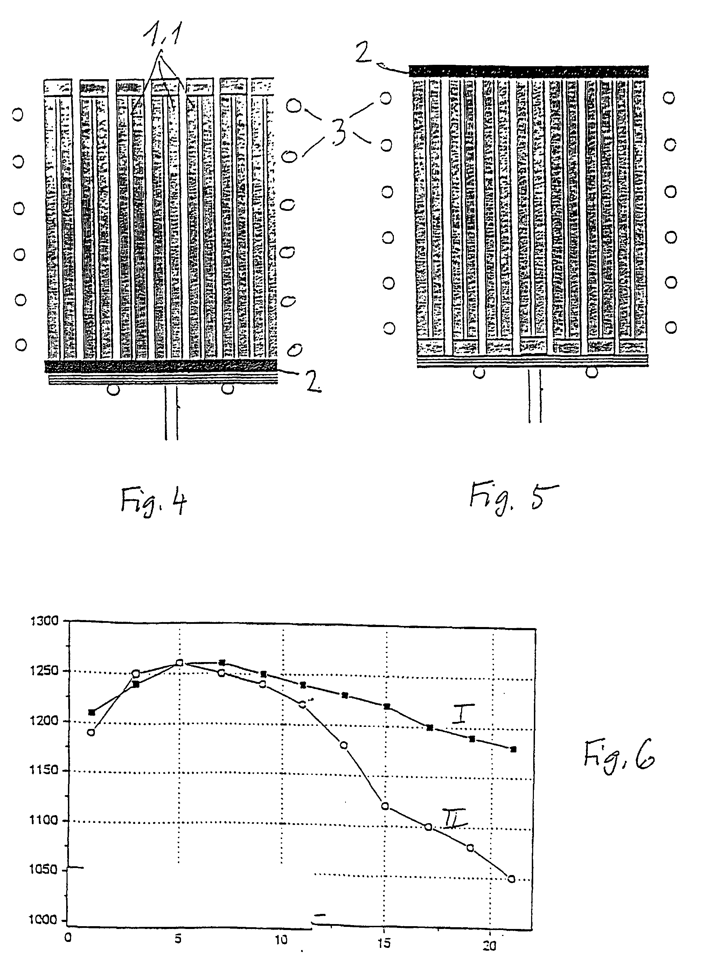

Bei den Darstellungen gemäß der Figuren 4 und 5 erkennt man wiederum einen Skulltiegel mit den Metallrohren 1.1. Die Metallrohre 1.1 sind umgeben von den Windungen 3 einer Hochfrequenzspule. Die Kurschlußeinrichtung 2 befindet sich bei der Ausführungsform gemäß Figur 4 im Bodenbereich, und zwar unmittelbar über dem Boden des Skulltiegels. Bei der Ausführungsform gemäß Figur 5 befindet sie sich an den oberen Enden der Metallrohre 1.1.

Die Ausführungsform gemäß Figur 4 eignet sich besonders zum Läutern von Glasschmelzen. Durch die Kurzschlußeinrichtung 2 wird das Hochfrequenzfeld stärker in den Bereich des Schmelzenspiegels gedrückt. Der Bereich des Schmetzenspiegels wird hierdurch stärker aufgeheizt. Gasblasen können durch die Schmelze in diesem Bereich nach oben hindurchtreten und aufplatzen.

Bei der Ausführungsform gemäß Figur 5 wird eine homogene Temperaturverteilung erreicht. Das Hochfrequenzfeld wird stärker in den Bereich des Bodens gedrückt. Die Schmelze im Bodenbereich wird dadurch stärker aufgeheizt, als im Bereich ihres Spiegels. Hierdurch wird eine Konvektion der Schmelze erzeugt, indem die heiße Schmelze aus dem Bodenbereich aufsteigt, so daß es zu einer Durchmischung von relativ heißer und relativ kalter Schmelze und damit zu einer Homogenisierung kommt. Außerdem wird sichergestellt, daß eine Kristallisation im Bodenbereich vermieden wird, so daß die Schmelze durch den im Bodenbereich befindlichen Auslaß problemlos abgelassen werden kann.

Figur 6 veranschaulicht das Tiefenprofil einer optischen Glasschmelze in einem Skulltiegel, und zwar durch zwei Kurven. Dabei zeigt die Ordinate die Temperatur in Grad Celsius an und die Abszisse die Tiefe des Bades, an der die Temperatur gemessen wurde, in cm.

Kurve I veranschaulicht den Verlauf der Temperatur über der Tiefe des Bades bei Anordnung eines Kurzschlußringes an den oberen freien Enden der Kühlfinger. Kurve II veranschaulicht den Verlauf der Temperatur bei Anordnung des Kurzschlußringes im Bodenbereich.

Wie man sieht, führt die Anordnung des Kurzschlußringes im oberen Bereich zu einem bei Verwendung des Skulltiegels als Schmelztiegel wesentlich günstigeren Ergebnis. Die Temperatur der Schmelze im Bodenbereich und die Temperatur der Schmelze im Bereich des Schmelzenspiegels weisen keine allzu großen Unterschiede auf.

Das Prinzip der Temperaturhomogenisierung durch Positionierung des elektrischen Kurzschlusses am Skulltiegelrand oben wurde mittels eines modifizierten Skulltiegels mit Platinablauf an einem optischen Glas, das im wesentlichen aus den Komponenten Siliziumoxid, Zinkoxid, Kalium- und Natriumoxid besteht, getestet.

Für das Schmelzen wurde ein Skulltiegel mit einem Durchmesser von 20 cm und einer Schmelzhöhe von 22 cm verwendet. Das Glas wurde mittels eines Brenners vorgeheizt und koppelt ab ca. 900° C selbst an das HF-Feld an, so daß der Brenner ausgeschaltet werden kann. Die HF-Frequenz beträgt 1 MHz. Die benötigte Leistung liegt je nach Temperatur der Schmelze zwischen 20 und 40 kW. Zum Gießen des Glases wird eine Schmelztemperatur von 1100° C eingestellt, hierfür wird eine Leistung von 25 kW benötigt.

Der Skulltiegel wurde einmal mit Kurzschluß nach unten standardmäßig eingebaut und einmal mit Kurzschluß oben. Am Boden befindet sich ein widerstandsbeheizter Platinauslaufflansch über den die Schmelze gegossen werden und die Glasqualität beurteilt werden kann.

Mittels Thermoelementen kann die Temperaturverteilung in der Schmelze gemessen werden. Die Thermoelemente werden über Durchführungskondensatoren und Optokoppler aus der HF-Zone herausgeführt. Das gefilterte Thermosignal kann mit Standardmeßgeräten erfaßt werden.

Die Messung der vertikalen Temperaturverteilung in der Tiegelmitte zeigt den deutlichen Vorteil der Positionierung des Kurzschlusses oben. Gegenüber dem Standardaufbau ist die Temperaturverteilung deutlich homogener. Dies hat mehrere Vorteile:

Einmal ist eine homogene Temperaturverteilung Voraussetzung für das Erschmelzen eines homogenen optischen Glases. Zum anderen liefert das Gießen durch einen Bodenablauf im Fall der homogeneren Temperaturverteilung mit Kurzschluß oben deutlich bessere Ergebnisse, da keine Kristallschicht am Boden störend wirkt und zur Verunreinigung des Endproduktes durch Kristalle führt. Zum Gießen ist eine Überhitzung der oberen Tiegelzone, um sicherzustellen, daß der untere Schmelzbereich flüssig ist, nicht notwendig. Das Gießen kann durch diese Tiegelmodifikation bei wesentlich niedrigeren und moderaten Temperaturen erfolgen.

## Patentansprüche

1. Skulltiegel für das Erschmelzen oder das Läutern von Gläsern oder Glaskeramiken;
1.1 mit einer Tiegelwandung (1);
1.2 mit einem Tiegelboden;
1.3 mit einer Induktionsspule (3), die die Tiegelwandung (1) umgibt und über welche Hochfrequenzenergie in den Tiegelinhalt einkoppelbar ist;
1.4 die Tiegelwandung (1) ist aus einem Kranz von Metallrohren (1.1) gebildet, die an ein Kühlmedium anschließbar sind, mit schlitzartigen Zwischenräumen zwischen einander benachbarten Metallrohren (1.1);
1.5 der Boden weist einen Ablauf für die Schmelze auf;
1.6 alle Metallrohre (1.1) sind miteinander kurzgeschlossen.

2. Skulltiegel (1) nach Anspruch 1, **dadurch gekennzeichnet, daß** der Kurzschluß im Bereich der oberen Enden der Metallrohre (1.1) vorgesehen ist.

3. Skulltiegel nach Anspruch 1, **dadurch gekennzeichnet, daß** der Kurzschluß im Bereich des Bodens vorgesehen ist.

4. Skulltiegel nach Anspruch 1, **dadurch gekennzeichnet, daß** der Kurzschluß im Bereich der oberen Enden der Metallrohre und im Bereich des Bodens vorgesehen ist.

5. Skulltiegel nach Anspruch 4, **dadurch gekennzeichnet, daß** der Kurzschluß in der Höhe variabel ist, insbesondere bei Vorliegen zweier Kurzschlüsse.

6. Vorrichtung nach einem der Ansprüche 1 bis 3, **dadurch gekennzeichnet, daß** der Kurzschluß mittels eines Metallrohres (1.1) hergestellt ist, das an ein Kühlmedium anschließbar ist.

## Claims

1. Skull crucible for melting or refining glasses or glass-ceramics;
1.1 having a crucible wall (1);
1.2 having a crucible base;
1.3 having an induction coil (3) which surrounds the crucible wall (1) and via which high-frequency energy can be introduced into the contents of the crucible;
1.4 the crucible wall (1) is formed from a ring of metal tubes (1.1), which can be connected to a cooling medium, with slot-like spaces between adjacent metal tubes (1.1);
1.5 the base has an outlet for the molten material;
1.6 all the metal tubes (1.1) are short-circuited with one another.

2. Skull crucible (1) according to Claim 1, **characterized in that** the short circuit is provided in the region of the upper ends of the metal tubes (1.1).

3. Skull crucible according to Claim 1, **characterized in that** the short circuit is provided in the region of the base.

4. Skull crucible according to Claim 1, **characterized in that** the short circuit is provided in the region of the upper ends of the metal tubes and in the region of the base.

5. Skull crucible according to Claim 4, **characterized in that** the height of the short circuit is variable, in particular when two short circuits are present.

6. Device according to one of Claims 1 to 3, **characterized in that** the short circuit is produced by means of a metal tube (1.1) which can be connected to a cooling medium.

## Revendications

1. Creuset à fond refroidi destiné à la fusion ou à l'affinage de verre ou de vitrocéramique ;
1.1 avec une paroi de creuset (1) ;
1.2 avec un fond de creuset ;
1.3 avec une bobine d'inductance (3) qui entoure la paroi de creuset (1) et par le biais de laquelle l'énergie haute fréquence peut être injectée dans le contenu du creuset ;
1.4 la paroi du creuset (1) est formée à partir d'une couronne de tubes métalliques (1.1) qui peuvent être raccordés à un fluide de refroidissement, avec des espaces intermédiaires en forme de fentes entre les tubes métalliques adjacents (1.1) ;
1.5 le fond présente une sortie pour la matière en fusion ;
1.6 tous les tubes métalliques (1.1) sont court-circuités les uns aux autres.

2. Creuset à fond refroidi (1) selon la revendication 1, **caractérisé en ce que** le court-circuit est prévu dans la région des extrémités supérieures des tubes métalliques (1.1).

3. Creuset à fond refroidi selon la revendication 1, **caractérisé en ce que** le court-circuit est prévu dans la région du fond.

4. Creuset à fond refroidi selon la revendication 1, **caractérisé en ce que** le court-circuit est prévu dans la région des extrémités supérieures des tubes métalliques et dans la région du fond.

5. Creuset à fond refroidi selon la revendication 4, **caractérisé en ce que** le court-circuit est variable en hauteur, notamment lors de l'établissement de deux courts-circuits.

6. Dispositif selon l'une quelconque des revendications 1 à 3, **caractérisé en ce que** le court-circuit est fabriqué au moyen d'un tube métallique (1.1) qui peut être raccordé à un fluide de refroidissement.
